# DEMANDE DE BREVET EUROPEEN

(11) **EP 3 945 036 A1**
(43) Date de publication de la demande: **02.02.2022**
(21) Numéro de dépôt: 21187974.7
(22) Date de dépôt: 27.07.2021
(51) Int. Cl.: B64G 1/58, F16L 59/02, B29C 65/08

(54) **ISOLANT THERMIQUE MULTI COUCHE ET PROCEDE DE FABRICATION DE L'ISOLANT THERMIQUE MULTI COUCHE**

(30) Priorité: 30.07.2020 FR 2008074
(71) Demandeur: Soditech, 13090 Aix-en-Provence (FR)
(72) Inventeur: SAUZE, François, 06800 CAGNES-SUR-MER (FR); DI CAMPO, Charlène, 06150 CANNES LA BOCCA (FR); DEVERRE, Adrien, 06150 CANNES LA BOCCA (FR)
(74) Mandataire: Marks & Clerk France

(57) **Abrégé**

L'invention concerne un isolant thermique destiné à recouvrir au moins un élément d'un satellite, l'isolant thermique (20) comprenant plusieurs couches (22, 24) superposées alternant des couches (22) à base de polymère thermoplastiques ou thermodurcissables et des couches (24) à base de fibres, les couches (22, 24) ayant sensiblement une même surface configurée pour recouvrir l'élément, dans lequel les différentes couches (22, 24) sont soudées entre elles le long d'une bordure (26) de l'isolant thermique (20).L'invention concerne également un procédé de réalisation de l'isolant thermique.

## Description

L'invention concerne un Isolant thermique multi couche et un procédé de fabrication de l'isolant thermique multi couche. Les isolants thermiques sont utilisés dans de nombreux domaines industriels et domestiques pour limiter le transfert thermique entre les faces de l'isolant. Dans l'industrie spatiale, l'isolation thermique présente un intérêt particulier à bord de satellites mis en œuvre dans un environnement particulièrement sévère. L'isolation thermique permet de limiter le transfert thermique entre l'extérieur et l'intérieur du satellite.

Il est utile de limiter les variations de température auxquelles les satellites sont soumis afin de protéger aussi bien les structures que les équipements embarqués. A cet effet, les satellites sont équipés d'isolants thermiques recouvrant leurs faces externes ainsi que leurs équipements internes. Ces isolants thermiques sont généralement multi couches et sont connus dans la littérature anglo-saxonne sous le nom de MLI pour leur acronyme anglais de : « Multi-Layer Insulation ». Les couches des isolants thermiques sont généralement réalisées dans des feuilles de matériaux de différentes natures. Il est par exemple possible d'alterner des couches de polymère thermoplastiques ou thermodurcissables et des voiles de fibres tissés ou non tissés. Tout autre type de matériaux est possible pour réaliser les différentes couches.

La réalisation des isolants thermiques multi couches adaptés aux satellites requiert de nombreuses opérations manuelles dont des opérations de découpe et d'assemblage de différentes feuilles pour former des matelas en accord avec les spécifications requises notamment de forme et de composition. Les isolants thermiques multi couches possèdent des formes souvent compliquées car adaptées aux formes des équipements qu'ils recouvrent. Il est possible de prévoir des ouvertures dans les isolants, notamment pour permettre le passage d'instruments ou d'éléments de structure du satellite. Dans la définition des formes, on cherche à créer une enceinte la plus hermétique possible entourant les équipements à isoler pour limiter au maximum les fuites thermiques.

Actuellement, du fait des faibles quantités de satellites produites, la découpe de chaque feuille est réalisée manuellement à partir de patrons définis en fonction des formes des faces à recouvrir. Le maintien des couches se fait au niveau des bords de l'isolant. Cette opération est parfois appelée :
« bordurage ». Ce bordurage peut être réalisé de plusieurs façons. Une première méthode consiste à prévoir un débordement d'une des feuilles externes par rapport aux autres feuilles devant former l'isolant, puis à replier ce débordement sur la feuille externe opposée. Une fois le repliement effectué, des pastilles adhésives viennent maintenir les deux feuilles externes ensemble. Une autre méthode consiste à découper toutes les feuilles aux mêmes dimensions, à les positionner les unes sur les autres et à recouvrir le chant de l'empilement de feuilles de rubans adhésifs adhérant sur les deux feuilles externes. Dans les deux méthodes évoquées, les manipulations sont très délicates et requièrent un savoir-faire important. La manipulation du ruban adhésif est particulièrement délicate. En effet, le ruban tend à adhérer aux feuilles, même quand cela n'est pas encore souhaité par l'opérateur.

Le bordurage, tel que pratiqué à ce jour, présente plusieurs inconvénients. Ni la précision dimensionnelle de l'isolant, ni la reproductibilité des méthodes de fabrication proposées n'est optimale. La qualité de l'isolant est très dépendante de la dextérité de l'opérateur réalisant notamment la découpe et l'assemblage des différentes feuilles formant l'isolant. Des rebuts peuvent intervenir lors d'une opération de contrôle réalisée à l'issu de l'assemblage.

L'invention vise à faciliter la réalisation d'isolants thermiques multi couches notamment en proposant un procédé mettant en œuvre la découpe et le soudage par ultrason. Ce procédé permet d'améliorer la précision dimensionnelle et la reproductibilité des isolants réalisés.

A cet effet, l'invention a pour objet un isolant thermique destiné à recouvrir au moins un élément d'un satellite, l'isolant thermique comprenant plusieurs couches superposées alternant des couches à base de polymère thermoplastiques ou thermodurcissables et des couches à base de fibres, les couches ayant sensiblement une même surface configurée pour recouvrir l'élément, dans lequel les différentes couches sont soudées entre elles le long d'une bordure de l'isolant thermique.

Avantageusement, au niveau de la soudure, le polymère, est diffusé entre les fibres.

La soudure peut être discontinue de façon à permettre l'évacuation d'air contenu entre les couches.

L'invention a également pour objet un procédé de réalisation d'un isolant thermique destiné à recouvrir au moins un élément d'un satellite, l'isolant thermique comprenant plusieurs couches superposées ayant sensiblement une même surface configurée pour recouvrir l'élément, le procédé comprenant une opération de soudage par ultrason des couches.

Le procédé de réalisation comprend avantageusement une opération de découpe par ultrason des différentes couches.

Les opérations de découpe et de soudage sont avantageusement simultanées.

Le procédé de réalisation comprend avantageusement une opération de marquage par ultrason d'une couche externe de l'isolant thermique.

Une opération d'empilement des différentes couches peut précéder l'opération de découpe, les différentes couches étant alors avantageusement découpées ensemble.

Une opération de maintien des différentes couches peut intervenir entre l'opération d'empilement des différentes couches et l'opération de découpe.

Une opération de bordurage par un élément adhésif peut venir compléter l'opération de soudage par ultrason des couches.

L'invention sera mieux comprise et d'autres avantages apparaîtront à la lecture de la description détaillée d'un mode de réalisation donné à titre d'exemple, description illustrée par le dessin joint dans lequel :
la figure 1 représente un satellite équipé d'isolants thermiques selon l'invention ;
la figure 2 représente en coupe partielle d'un isolant thermique selon l'invention ;
la figure 3 représente un outil de découpe et de soudage mis en œuvre pour réaliser l'isolant thermique ;
la figure 4 représente un exemple de machine mise en œuvre pour réaliser l'isolant thermique ;
les figures 5a, 5b et 5c illustrent plusieurs exemples d'alternatives d'un procédé de réalisation d'un isolant thermique selon l'invention.

Par souci de clarté, les mêmes éléments porteront les mêmes repères dans les différentes figures.

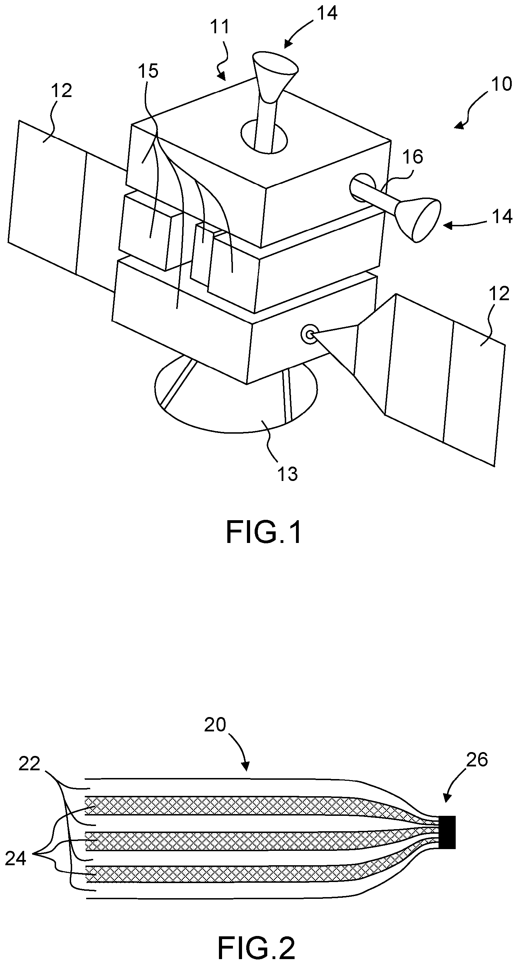

La figure 1 représente un satellite 10 destiné à l'orbite terrestre. Il est bien entendu possible de mettre en œuvre l'invention dans tout type d'équipement spatial, et notamment des satellites destinés à orbiter autour de tout type d'objet céleste.

Le satellite 10 comprend un corps 11 auquel sont fixés des équipements externes tels que par exemple des panneaux solaires 12 et une antenne de communication 13. D'autres équipements externes comme des propulseurs 14 peuvent être fixés au corps 11. A l'intérieur du corps 11 se trouvent des équipements internes 15 tels que notamment des équipements électroniques permettant d'assurer la mission du satellite et de gérer son maintien en orbite en pilotant ses propulseurs.

La forme parallélépipédique générale du corps 11 du satellite 10, représentée sur la figure 1 n'est donnée qu'à titre d'exemple. Le corps 11 du satellite 10 peut posséder toute forme possédant des faces externes planes ou courbes. De même, les équipements aussi bien internes qu'externes peuvent posséder toute forme adaptée à leur usage.

Les faces externes du corps 11 ainsi que certains équipements, sont recouverts d'isolants thermiques 20 permettant d'isoler thermiquement les éléments, corps et équipements qu'ils recouvrent. Les isolants thermiques 20 permettent de protéger les équipements internes des variations de température importantes de l'environnement dans lequel évolue le satellite 10. Les isolants thermiques permettent également d'isoler la chaleur produite, par exemple par des tuyères 16 des propulseurs 14. De façon plus générale, les isolants thermique 20 permettent de limiter le transfert thermique de ou vers les éléments recouverts. Les isolants thermiques 20 ont la forme d'un matelas comprenant plusieurs couches superposées. L'épaisseur du matelas est de l'ordre de quelques dixièmes de millimètres à quelques millimètres pour les plus épais. Le matelas reste généralement souple ce qui lui permet d'épouser la forme de faces qu'il recouvre. Un isolant thermique 20 peut recouvrir plusieurs faces et être plié à la jonction entre les faces qu'il recouvre. La surface d'un isolant thermique 20 est voisine de la surface de la face ou des faces qu'il recouvre. L'isolant thermique 20 peut comprendre des ouvertures permettant aux jonctions entre le corps 11 et des équipements externes de traverser l'isolant thermique 20.

La figure 2 représente en coupe partielle un isolant thermique 20 destiné à recouvrir un élément du satellite 10. L'isolant thermique 20 comprend plusieurs couches 22 à base de matériau thermoplastique, thermodurcissable ou à base de tout type de matériau pouvant conférer à l'isolant la souplesse requise pour recouvrir l'élément de satellite à isoler. Entre les couches 22, l'isolant thermique 20 comprend des couches intercalaires de fibres 24 tissés ou non tissés. Autrement dit, l'isolant thermique 20 comprend une succession alternée de couches de film 22 et de couches 24 à base de fibres. Sur la figure 2, quatre couches 22 et trois couches intercalaires 24 sont représentées à titre d'exemple. Il est bien entendu possible de réaliser un isolant thermique possédant un nombre de couches plus ou moins grand. Typiquement, on peut réaliser des isolants thermiques possédant entre huit et vingt couches.

Les différentes couches 22 et 24 sont soudées entre elles le long de la bordure 26 de l'isolant thermique 20. La bordure 26 comprend bien entendue des bords extérieurs de l'isolant thermique 20. La bordure 26 peut également être formée sur des bords intérieurs autour des ouvertures réalisées dans l'isolant thermique 20 pour notamment permettre le passage des liaisons entre le module 12 et les équipements externes au corps 11. Plus précisément le soudage des différentes couches permet de réaliser la fusion d'au moins les couches 22 en chauffant localement ces couches au voisinage de leur température de fusion. Il est possible de réaliser le soudage sans atteindre la température de fusion de certaines couches, par exemple des couches intercalaires 24. Cependant, la fusion des couches 22 permet au matériau qui les constitue de fondre et de se mêler aux couches intercalaires et notamment de pénétrer entre les fibres de ces couches. Ainsi, toutes les couches 22 et 24 sont maintenues entre elles au niveau de la bordure 26.

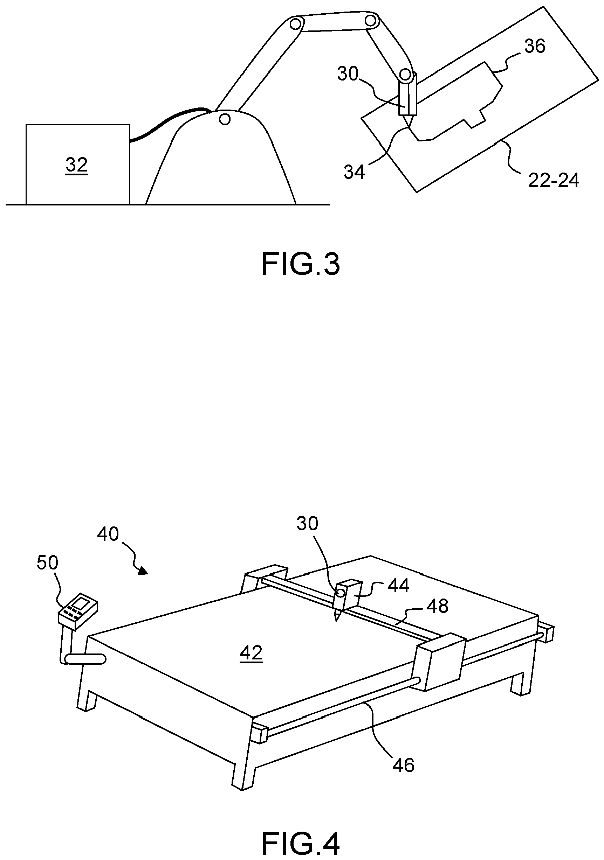

La figure 3 représente un outil mis en œuvre pour réaliser l'isolant thermique 20. Plus précisément, la figure 3 représente une sonotrode 30 et ses moyens d'alimentations électriques 32. La sonotrode 30 est une sonde comprenant une tête 34 pouvant vibrer à des fréquences ultrasonores typiquement entre 20 et 70 kHz. La tête 34 est disposée au contact de matériaux, et les vibrations de la tête 34 font vibrer les matériaux. Les vibrations entrainent un échauffement de ces matériaux. Appliqué à l'isolant thermique 20, la tête 34 de la sonotrode 30 est placée en contact avec la couche extérieure 22 de l'isolant thermique 20 au niveau de la bordure 26 en suivant un contour 36. L'énergie émise par la sonotrode 30 sous forme d'ultrasons est dissipée sous forme de chaleur dans les différentes couches 22 et 24, localement au niveau de la bordure 26. Le niveau d'énergie émis par la sonotrode 30 est adapté pour qu'au moins les couches 22 atteignent une température voisine de leur température de fusion afin de provoquer un soudage des différentes couches 22 et 24 entre elles.

La sonotrode 30 peut également être utilisée pour découper les différentes couches formant l'isolant thermique 20. A cet effet, l'énergie générée sous forme d'ultrasons est adaptée pour faire faire fondre le matériau des différentes couches 22 et 24 de l'isolant thermiques 20. La forme de la partie de la sonotrode entrant en contact avec les couches 22 et 24 est adaptée à la découpe. Plus précisément, une sonotrode adaptée à la découpe peut posséder une forme plus tranchante qu'une sonotrode adaptée au soudage. Il est également possible d'utiliser une même sonotrode pour réaliser les deux opérations : découpe et soudage.

Il est également possible d'utiliser la sonotrode 30 pour réaliser un ou plusieurs marquages de l'isolant thermique 20. Ces marquages peuvent permettre l'identification et le repérage de zones particulières de l'isolant thermique 20, par exemple pour sa fixation sur l'élément de satellite qu'il recouvre. Pour cette opération de marquage, comme précédemment, il est possible d'utiliser une sonotrode adaptée à la découpe et/ou au soudage. Alternativement, il est possible de mettre en œuvre une sonotrode spécifique dont la forme est adaptée au marquage à réaliser.

La figure 4 représente une machine 40 mise en œuvre pour réaliser l'isolant thermique 20. La machine comprend une table 42 sur laquelle les couches destinées à former l'isolant thermique 20 sont disposées les unes sur les autres dans l'ordre où elles sont placées dans l'isolant thermique 20 une fois réalisé. La sonotrode 30 est disposée sur un chariot 44 mobile en translation selon deux axes perpendiculaires. Le premier axe est porté par un rail 46 s'étendant le long d'un bord de la table 42 et le second axe est porté par un rail 48 s'étendant perpendiculairement au rail 46. Un pupitre de contrôle 50 assure la commande de la machine 40. Dans l'exemple représenté, la position de la sonotrode 30 est réalisée dans un repère orthogonal matérialisé par les rails 46 et 48. D'autres types de positionnement de la sonotrode 30 par rapport à la table 42 sont bien entendu possibles, notamment au moyen de bras articulés dont on pilote le positionnement angulaire des articulations reliant les bras.

Pour réaliser les différentes opérations que la ou les sonotrodes doivent effectuer, le déplacement de la sonotrode 30 est programmé pour suivre la forme que l'on souhaite réaliser pour l'isolant thermique 20. Plus précisément, le contour extérieur et le contour d'éventuelles ouvertures peuvent être programmés. Les données de programmation peuvent être issues d'un traitement des données de conception de l'isolant thermique 20. Sur la figure 4, une seule sonotrode 30 est représentée. Dans le cas où différentes sonotrodes adaptées chacune à une opération à réaliser (découpe, soudage, marquage) sont mises en œuvre, il est possible de toutes les monter sur le chariot 44 ou même de prévoir plusieurs chariots distincts montés sur le rail 48, un par sonotrode. Chacun des chariots est équipé d'un mécanisme de translation vertical permettant à la sonotrode de venir au contact de l'isolant thermique 20 au moment opportun. Cette translation permet notamment de souder la bordure 26 de façon discontinue de façon à permettre l'évacuation d'air contenu entre les couches 22 et 24 une fois l'isolant 20 réalisé.

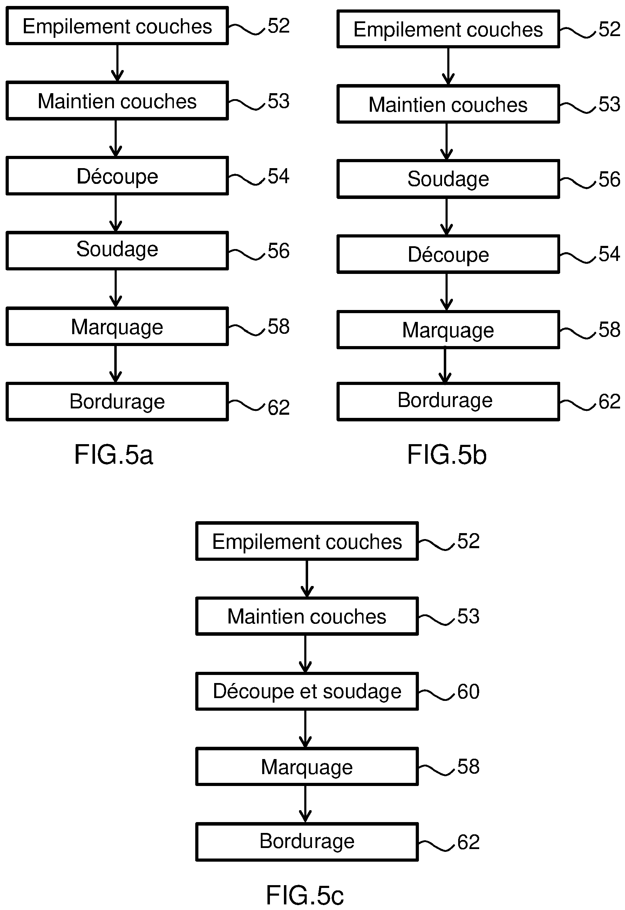

Les figures 5a, 5b et 5c représentent plusieurs exemples d'alternatives d'un procédé de réalisation d'un isolant thermique au moyen d'une ou plusieurs sonotrodes 30.

Il est possible de découper chacune des couches indépendamment des autres. Cependant, il est avantageux de découper toutes les couches simultanément afin de s'assurer qu'elles aient toutes les mêmes dimensions. De plus, en assurant le positionnement des couches les unes par rapport aux autres avant la découpe, on s'assure que les bords des différentes couches coïncident parfaitement. Pour ce faire, lors d'une première opération 52, commune aux différentes alternatives, les couches sont empilées sur la table 42 dans l'ordre qu'elles doivent respecter dans leur positionnement relatif dans l'isolant thermique 20. Après la première opération 52, il est possible de prévoir une opération 53 de maintien du positionnement relatif des couches entre elles. Pour maintenir le positionnement relatif des couches, il est possible de disposer de façon temporaire un poids au centre de l'isolant thermique permettant de maintenir les couches entre elles par adhérence. Il est également possible de prévoir dans la machine 40 un système d'aspiration permettant de maintenir les couches par dépression. Tout autre moyen de maintien du positionnement des couches entre elles est bien entendu possible dans le cadre de l'invention comme par exemple un maintien par des moyens magnétiques ou par soudage local de quelques points.

Dans l'alternative de la figure 5a, après empilement des couches et maintien de leur positionnement relatif, lors d'une opération 54 celles-ci sont découpées simultanément au moyen de la sonotrode. Après l'opération 54 de découpe, intervient une opération 56 de soudage des couches entre elles. Une opération 58 de marquage de la face externe de l'isolant thermique 20, face opposée à celle en contact avec la table 42 est ensuite réalisée. Dans les différentes alternatives, l'opération 58 est réalisée après découpe et soudage des couches. En pratique l'opération 58 peut intervenir dès l'opération 52 d'empilement réalisée, avant l'opération 56 de soudage ou même avant l'opération 54 de découpe.

Dans l'alternative de la figure 5b, après empilement des couches, et maintien de leur positionnement relatif, intervient l'opération 56 de soudage puis l'opération 54 de découpe. Cette alternative présente l'intérêt d'assurer un positionnement parfait des couches entre elles avant leur découpe qui est réalisée au voisinage immédiat de la soudure réalisée à l'opération 56. Dans l'alternative de la figure 5b, l'opération 53 de maintien des couches peut tout de même présenter un intérêt pour faciliter l'opération de soudage 56.

Il est possible de profiter des avantages des alternatives représentées sur les figure 5a et 5b en réalisant l'opération 53 au moyen de quelques points de soudage des couches afin de fixer leur positionnement relatif puis d'enchainer la découpe des couches et enfin de réaliser l'opération de soudage complet au niveau de la bordure 26 qui n'est alors pas gênée par une découpe ultérieure.

Dans l'alternative de la figure 5c, après empilement des couches, intervient une opération 60 de découpe et de soudage simultanées au moyen d'une même sonotrode. Les opérations de positionnement 53 de découpe 54 et de soudage 56 ou de découpe et soudage 60 sont alors réalisés au moyen de la même machine 40 ce qui simplifie le procédé de fabrication de l'isolant thermique 20.

L'opération de soudage 56 ou l'opération de découpe et soudage 60 assurent un bordurage de l'isolant thermique 20. Il est possible de compléter ce bordurage par une opération supplémentaire 62 de bordurage par un élément adhésif venant compléter et redonder le bordurage assuré par le soudage des couches 22 et 24. L'opération supplémentaire 62 peut intervenir immédiatement après la découpe et le soudage des différentes couches 22 et 24. Il est cependant avantageux de réaliser l'opération supplémentaire 62 après l'opération 58 de marquage, c'est-à-dire après toutes les opérations à effectuer par la machine 40.

## Revendications

1. Isolant thermique destiné à recouvrir au moins un élément (15, 16) d'un satellite (10), l'isolant thermique (20) comprenant plusieurs couches (22, 24) superposées alternant des couches (22) à base de polymère thermoplastiques ou thermodurcissables et des couches (24) à base de fibres, les couches (22, 24) ayant sensiblement une même surface configurée pour recouvrir l'élément (15, 16), dans lequel les différentes couches (22, 24) sont soudées entre elles le long d'une bordure (26) de l'isolant thermique (20).

2. Isolant thermique selon la revendication 1 dans lequel au niveau de la soudure, le polymère, est diffusé entre les fibres.

3. Isolant thermique selon l'une des revendications précédentes, dans lequel la soudure est discontinue de façon à permettre l'évacuation d'air contenu entre les couches (22, 24).

4. Procédé de réalisation d'un isolant thermique (20) destiné à recouvrir au moins un élément (15, 16) d'un satellite (10), l'isolant thermique (20) comprenant plusieurs couches (22, 24) superposées ayant sensiblement une même surface configurée pour recouvrir l'élément (15, 16), le procédé comprenant une opération de soudage par ultrason (56 ; 60) des couches (22, 24).

5. Procédé de réalisation selon la revendication 4, comprenant en outre une opération de découpe (54 ; 60) par ultrason des différentes couches (22, 24).

6. Procédé de réalisation selon la revendication 5, dans lequel les opérations (60) de découpe et de soudage sont simultanées.

7. Procédé de réalisation selon l'une des revendications 4 à 6, comprenant en outre une opération de marquage par ultrason d'une couche externe de l'isolant thermique (20).

8. Procédé de réalisation selon l'une des revendications 4 à 7 en tant que revendication dépendante de la revendication 5, dans lequel une opération (52) d'empilement des différentes couches (22, 24) précède l'opération (54) de découpe, les différentes couches (22, 24) étant alors découpées ensemble.

9. Procédé de réalisation selon la revendication 8 dans lequel une opération (53) de maintien des différentes couches (22, 24) intervient entre l'opération (52) d'empilement des différentes couches (22, 24) et l'opération (54 ; 60) de découpe.

10. Procédé de réalisation selon l'une des revendications 4 à 9 dans lequel une opération (62) de bordurage par un élément adhésif vient compléter l'opération de soudage par ultrason (56 ; 60) des couches (22, 24).
